# EUROPÄISCHE PATENTSCHRIFT

(11) **EP 1 455 980 B1**
(45) Veröffentlichungstag und Bekanntmachung des Hinweises auf die Patenterteilung: **09.04.2008**
(21) Anmeldenummer: 02792572.6
(22) Anmeldetag: 13.12.2002
(51) Int. Cl.: B23C 5/10, B23C 5/22

(54) **FRÄSWERKZEUG**
MILLING TOOL
OUTIL DE FRAISAGE

(30) Priorität: 21.12.2001 AT 9722001
(43) Veröffentlichungstag der Anmeldung: 15.09.2004
(73) Patentinhaber: CERATIZIT Austria Gesellschaft m.b.H., 6600 Reutte /Tirol (AT); AIRBUS FRANCE (Société par Actions Simplifiée), 31060 Toulouse (FR)
(72) Erfinder: SCHLEINKOFER, Uwe, A-6600 Reutte (AT); DUWE, Juergen, A-6611 Heiterwang (AT); KOCH, Wolfgang, A-6600 Reutte (AT); Le Borgne, Didier, 44830 Bouaye (FR)
(86) Internationale Anmeldenummer: PCT/AT2002/000348
(87) Internationale Veröffentlichungsnummer: WO 2003/053618

(56) Entgegenhaltungen:
- EP-A- 0 699 495
- EP-A- 1 075 889
- US-A- 6 048 140
- PATENT ABSTRACTS OF JAPAN vol. 2000, no. 14, 5. März 2001 (2001-03-05) & JP 2000 308908 A (TOSHIBA TUNGALOY), 7. November 2000 (2000-11-07)
- PATENT ABSTRACTS OF JAPAN vol. 2000, no. 08, 6. Oktober 2000 (2000-10-06) & JP 2000 141123 A (TOYOTA MOTOR), 23. Mai 2000 (2000-05-23)

## Beschreibung

Die Erfindung betrifft ein Fräswerkzeug mit mindestens einem Schneidenbereich, mit jeweils einer aus Hauptschneide, Schneidecke - wahlweise mit angrenzendem Planschneidenabschnitt - und Nebenschneide aufgebauten Schneidengeometrie, zum Fräsen von in Ebenenrichtung parallel zur Rotationsachse des Fräswerkzeuges glatten Werkstückoberflächen.

Derartige Fräswerkzeuge werden beispielsweise beim Fräsen zum Auskammern großer Ausnehmungen in Bauteilen eingesetzt. Dabei bearbeitet das Fräswerkzeug mit der Hauptschneide die Seitenwand der Ausnehmung, während bei kleinen Schneidengeometrien der stirnseitige Teil der Schneidecke oder bei größeren Schneidengeometrien zusätzlich eine stirnseitig an die Schneidecke angrenzende Planschneide, die Bodenfläche der Ausnehmung zerspant. In Abstimmung auf die Gesamtlänge der Hauptschneide wird die optimale Frästiefe bei der Zerspanung festgelegt und die Ausnehmung in mehreren Durchgängen durch zeilenförmig übereinanderliegende Teilbearbeitungsabschnitte hergestellt.

Die EP 0 489 702 B1 beschreibt beispielsweise eine quadratische Wendeschneidplatte mit vollständig geraden Schneidkanten auch für eine Verwendung in Fräswerkzeugen. Eine derartige Schneidengeometrie würde bei einem axialen Einstellwinkel von 0° und unter Vernachlässigung der Fertigungstoleranzen von Plattensitz und Wendeschneidplatte die Herstellung einer absolut parallel zur Rotationsachse verlaufenden glatten Oberfläche der Seitenwand ermöglichen, da in diesem Fall auch die Erzeugende der bei Rotation des Fräswerkzeuges entstehenden Hüllfläche eine Gerade ist. Ein axialer Einstellwinkel von 0° ist in der Praxis in der Regel wegen des gleichzeitigen vollständigen Eingriffs der Hauptschneide aber kaum realisierbar, so dass die Wendeschneidplatte um einen bestimmten axialen Einstellwinkel, der in der Praxis in einem Bereich zwischen 1 ° und 15° liegt, verkippt werden muss. Aufgrund dieser Verkippung ist die Erzeugende der Hüllfläche keine Gerade mehr, sondern eine zusammengesetzte Kurve, durch welche eine wellenförmige Oberfläche erzeugt wird, deren Wellentäler in der Praxis verhältnismäßig tief sind und zwar in der Größenordnung von einigen Hundertstel Millimetern. Darüber hinaus sind die Wellenberge stark ansteigend und damit scharfkantig. Es ergibt sich daher eine Oberfläche mit fühlbarer Riefigkeit, auf der nachträglich aufzubringende Lacke nur schlecht haften und abplatzen können.

Die EP 0 587 109 B1 beschreibt eine im wesentlichen quadratische Wendeschneid-platte zum Fräsen, bei der jede Schneidkante drei aufeinanderfolgende unter-schiedliche Abschnitte aufweist. Zwei aufeinanderfolgende, von der Schneidecke ausgehende Abschnitte dienen als Hauptschneide, welche am Werkstück die Seitenwand der Ausnehmung zerspant. Die beiden Abschnitte sind dabei so ausgestaltet, dass bei der Wendeschneidplatte auch in Einbaulage, d.h. unter Berücksichtigung des axialen und radialen Einstellwinkels im Werkzeuggrundkörper alle Punkte theoretisch auf einer exakt zylinderförmigen Hüllfläche liegen, d.h. die Erzeugende, welche die Hüllfläche erzeugt, ist ebenfalls eine exakte Gerade. Der dritte Abschnitt jeder Schneidkante ist so ausgelegt, dass er beim Bearbeiten der Seitenwand freigestellt ist und als Planschneide zur Bearbeitung der Bodenfläche der gefrästen Ausnehmung für die nachfolgende Hauptschneide dient.

Ebenfalls exakt zylindrische Hüllflächen werden theoretisch mit einem Fräswerkzeug entsprechend der EP 0 239 045 B1 erzeugt. Der einzige Unterschied zur vorstehenden Veröffentlichung besteht darin, dass die Wendeschneidplatte eine langgestreckte parallelogrammförmige Ausgestaltung besitzt und nur die zwei längeren Schneidkanten, dafür aber über eine größere Länge als Hauptschneiden eingesetzt werden können.

Mit einer derartigen Ausgestaltung von Wendeschneidplatten entsprechend den zwei letzten Veröffentlichungen wird zwar theoretisch eine glatte Oberfläche exakt parallel zur Rotationsachse ohne störende Übergänge erreicht. In der Praxis kommt es jedoch aufgrund fertigungsbedingter Maßabweichungen der Wendeschneidplatten und der Plattensitze der Werkzeuggrundkörper, sowie durch Abdrängungsvorgänge des Werkzeuges während des Zerspanungsprozesses dazu, dass je nach Maßabweichung entweder die Anfangs- oder die Endbereiche der Hauptschneiden, welche die Seitenwand zerspanen, nicht mehr auf der theoretisch vorgesehenen Position liegen und folgedessen keine exakt zylindrischen Hüllkurve erreicht wird. Es kommt dadurch zu einem stufenförmigen Profil der bearbeiteten Oberflächen dessen Übergänge wiederum äußerst spitzwinkelig und scharfkantig ausgeprägt sind, so dass derartige Oberflächen in vielen Fällen nicht der geforderten Kundenspezifikation entsprechen.

Die EP-A-1075889 beschreibt ein Fräswerkzeug mit einem Schneideinsatz, der eine unter einem definierten Winkel angestellte stirnseitige Hauptschneidkante, eine bogenförmige Schneidecke, sowie eine Umfangsschneidkante die nach rückwärts auf die Fräserachse hin zuläuft, aufweist. Durch diese Ausgestaltung soll ein Rattern bei der Zerspanung weitgehend vermieden werden. Durch die auf die Fräserachse hin zulaufende Umfangsschneidkante wird jedoch ein stufenförmiges Profil der Seitenwände am bearbeiteten Werkstück erzeugt.

Aufgabe der Erfindung ist es daher, ein Fräswerkzeug mit einer Schneidengeometrie zu schaffen, bei dem die damit bearbeitete Werkstückoberfläche parallel zur Rotationsachse des Fräswerkzeuges im Vergleich zu für vergleichbare Zerspanungsvorgänge verwendeten Fräswerkzeugen geringere Oberflächenrauhigkeiten aufweist und damit deutlich glatter ist.

Erfindungsgemäß wird dies dadurch erreicht, dass die Erzeugende der bei Rotation des Fräswerkzeuges entstehenden Hüllfläche aneinander grenzend aufweist, einen Schneideckenbereich, einen ersten Abschnitt und einen zweiten Abschnitt; dass der erste Abschnitt von mindestens 1 mm Projektionslänge - in der Projektion auf die Rotationsachse - den kleinsten Abstand von der Rotationsachse im an die Schneidecke angrenzenden Anfang und den größten Abstand am Ende dieses Abschnittes aufweist, wobei die Tangenten an jeden Punkt dieses Abschnittes mit der Richtung der Rotationsachse jeweils einen Winkel α₁ im Winkelbereich von 0° bis 5 ° einschließen, dass weiters der zweite Abschnitt von mindestens 1,5 mm Projektionslänge den größten Abschnitt von der Rotationsachse am an den ersten Abschnitt angrenzenden Anfang des zweiten Abschnittes und den kleinsten Abstand am Ende dieses Abschnittes aufweist, wobei die Tangenten an jeden Punkt dieses Abschnittes mit der Richtung der Rotationsachse jeweils einen, zum Ende hin stetig zunchmenden Winkel α₂ im Winkelbereich von > 0° bis 3° einschließen; und dass die Projektionslänge des zweiten Abschnittes mindestens 1,5 mal so groß ist wie die Projektionslänge des ersten Abschnittes.

Das Fräsen ist ein Zerspanungsvorgang mit sich um seine Rotationsachse drehendem Werkzeug. Dabei wird eine mit der rotationssymmetrischen Hüllfläche des Fräswerkzeuges übereinstimmende Schnittfläche im Werkstück erzeugt.

Die Form und die Lage der Schnittfläche im Werkstück wird durch die Erzeugende des Fräswerkzeuges vorgegeben, wobei die Erzeugende aus der Summe aller tatsächlich mit dem Werkstück in Eingriff stehenden Schneiden bzw. Schneidenbereiche des rotierenden Fräswerkzeuges gebildet ist. Die Rotationsfläche der Erzeugenden ist die Hüllfläche des Fräswerkzeuges.

Der Grundgedanke der Erfindung ist es, die Hauptschneide des Fräswerkzeuges schon von vornherein so auszulegen, dass die entsprechende Erzeugende der Hüllfläche des Fräswerkzeuges auch im Falle einer theoretisch erwünschten Werkstück-Schnittfläche mit zur Rotationsachse parallelen Kontur keine, in der Praxis ja ohnehin nie erreichbare, ideale vollständig zylindrische Hüllfläche mit dem Durchmesser des Fräswerkzeuges erzeugt, sondern dass vorzugsweise nur ein einziger von allen die reale Erzeugende bildenden Punkten auf der fiktiven (idealen) Erzeugenden der idealen Zylinderfläche liegt, während die reale Erzeugende in ihrem übrigen Verlauf von der fiktiven Erzeugenden der idealen Zylinderfläche erfindungsgemäß beabstandet ist. Selbstverständlich liegt die Ausgestaltung eines Fräswerkzeuges auch dann noch im beanspruchten Umfang der Erfindung, wenn zusätzlich ein begrenzter Endbereich des ersten Abschnittes der Erzeugenden derart, nämlich gerade ausgeführt ist, dass dieser Endbereich auf der fiktiven Erzeugenden der idealen Zylinderfläche liegen würde.
So ausgelegt, schneidet das Fräswerkzeug mit dem Teil der Hauptschneide, der dem ersten Abschnitt der Erzeugenden entspricht vor. Beim Nachsetzen des Fräswerkzeuges um die Schnitttiefe ap glättet der Teil der Hauptschneide, der dem zweiten Abschnitt der Erzeugenden entspricht, die vorgeschnittene Werkstückoberfläche.
Zur Erzeugung einer möglichst glatten Werkstückoberfläche ist es wichtig, die Hauptschneide erfindungsgemäß so auszulegen, dass die (reale) Erzeugende der Hüllfläche in ihrem sonstigen Verlauf beabstandet, aber möglichst gering von der fiktiven Erzeugenden der idealen Zylinderfläche beabstandet ist. Dabei ist zu berücksichtigen, dass auch als Folge fertigungsbedingter Maßabweichungen der Hauptschneide ein "Nachschneiden" des Werkstückes, d.h. ein Überschreiten der fiktiven Hüllfläche bzw. der Erzeugenden des idealen Zylinders im gesamten Verlauf der realen Erzeugenden mit Sicherheit vermieden wird.
In der Praxis hat es sich bewährt, wenn der maximale Abstand des ersten Abschnittes der Erzeugenden von der fiktiven Erzeugenden der idealen Zylinderfläche zwischen 5 µm und 15 µm liegt und der maximale Abstand des zweiten Abschnittes der Erzeugenden am Ende des schneidenden Bereiches der Hauptschneide von der fiktiven Erzeugenden der idealen Zylinderfläche zwischen 5 µm und 30 µm liegt.

Die mit einem derart erfindungsgemäß ausgestatteten Fräswerkzeug erzeugte Oberfläche ist zwar noch wellenförmig, d.h. nicht absolut glatt, die Wellentäler sind jedoch sprunghaft kleiner als bei Fräswerkzeugen deren Hauptschneiden nach dem Stand der Technik ausgeführt sind. Durch die geringeren Tiefen der Wellentäler sind auch die Wellenberge entsprechend stumpfwinkeliger. Damit wird erreicht, dass beispielsweise Lackschichten, welche auf der Oberfläche entsprechend gefertigter Werkstücke aufgebracht werden, gut haften und nicht abplatzen.

Die einzelnen Abschnitte der Erzeugenden in der erfindungsgemäßen Ausführung können als Kreisbogen, als Gerade, als Ellipsenbogen oder auch in Form einer Aneinanderreihung einzelner, kurvenförmiger oder gerader Segmente gebildet werden.
Ein durch die Schneidecke gebildeter Bereich der (realen) Erzeugenden kann entweder relativ scharfkantig, als Kreisbogen, mit kleinem Radius, oder stark abgerundet, als Kreisbogen mit großem Radius ausgeführt sein. Er kann aber auch in Form einer Aneinanderreihung einzelner kurvenförmiger oder gerader Segmente gebildet werden.

Die stetigen Übergänge zwischen dem Schneideckenbereich sowie dem ersten Abschnitt und zweitem Abschnitt können beliebig, als gerade oder gekrümmte Abschnitte ausgeführt sein, wobei scharfkantige Übergänge möglichst zu vermeiden sind.

Zur besseren Spanabfuhr kann die Schneidengeometrie auf der Spanfläche des erfindungsgemäßen Fräswerkzeuges, insbesondere bei Verwendung von Wendeschneidplatten mit einer Spanleitstufengeometrie versehen sein.

Eine möglichst optimale Qualität der bearbeiteten Oberfläche wird dann erreicht, wenn die Schneidengeometrie so ausgelegt ist, dass die Projektionslänge, das ist die auf die Rotationsachse bezogenen Längsausdehnungen der realen Erzeugenden, gebildet aus der Schneidecke und erstem Abschnitt der Hauptschneide in Summe in etwa der für die Zerspanung vorgesehenen Schnitttiefe ap des Fräswerkzeuges entsprechen.

Eine weitere Voraussetzung für besonders gute Oberflächenqualitäten ist, dass die Projektionslänge des ersten Abschnittes innerhalb eines Bereiches liegt, der etwa 20 - 35 % der Summe der Projektionslängen des ersten und des zweiten Abschnittes beträgt.
Ein Wert von 10 % sollte für diesen Bereich in der Praxis nicht unterschritten werden, da sonst die Oberflächenqualität nicht in ausreichendem Maß verbessert wird. Wenn das Fräswerkzeug einen an die Schneidecke angrenzenden Planschneidenabschnitt aufweist, der in etwa 90° zur Rotationsachse des Fräswerkzeuges verläuft, wird eine weitgehend ebene, großflächige Bearbeitung des Bodens der zu fräsenden Ausnehmung erreicht.

Besonders vorteilhaft lässt sich der erfindungsgemäße Schneidenbereich an einem Fräswerkzeug dann verwirklichen, wenn das Fräswerkzeug mit einer oder mehreren Wendeschneidplatten ausgestattet ist. Dadurch kann ein verschleißbedingtes Nachschleifen des Schneidenbereiches entfallen und es wird eine besonders hohe Wirtschaftlichkeit des Fräswerkzeuges erreicht.

Eine besonders vorteilhafte Ausgestaltung des erfindungsgemäßen Fräswerkzeuges wird dann erreicht, wenn der erste und zweite Abschnitt kreisbogenförmig gekrümmt sind, wobei der Radius der Krümmung des ersten Abschnittes innerhalb eines Bereiches liegt, der der 8 bis 15-fachen Gesamtlänge der Hauptschneide entspricht und der Radius der Krümmung des zweiten Abschnittes innerhalb eines Bereiches liegt der der 20 bis 40-fachen Gesamtlänge der Hauptschneide entspricht. Innerhalb dieser Bereiche werden besonders hohe Oberflächengüten erreicht.

Von Vorteil kann es auch sein, anschließend an den zweiten Abschnitt einen dritten Abschnitt anzuordnen, wobei die Tangenten an jeden Punkt des dritten Abschnittes einen Winkel α₃ von mehr als 3° mit einer Parallelen zur Rotationsachse einschließen, wobei die jeweiligen Werte des Winkels α₃ vom Beginn bis zum Ende dieses Abschnittes kontinuierlich größer werden. Durch eine derartige Ausgestaltung wird auch bei großen Frästiefen erreicht, dass das nacheilende Ende der Schneidengeometrie nicht nachschneidet und damit keine Verschlechterung der Oberflächengüte in Kauf genommen werden muss.

Bei Wendeschneidplatten hat es sich auch bewährt, wenn die einzelnen Nebenschneiden mit der zugehörigen Schneidecke und dem Abschnitten der Hauptschneide zumindest in einem überwiegenden Längenabschnitt auf einer Ebene parallel zur Auflagefläche der Wendeschneidplatte liegen und dass eventuell nicht auf der gemeinsamen Ebene liegende Schneidkantenabschnitte von dieser Ebene abfallend ausgeführt sind.

Des weiteren ist es von Vorteil, wenn bei den Wendeschneidplatten für das erfindungsgemäße Fräswerkzeug die an die einzelnen Schneidkanten und an die Schneidecke anschließende Freifläche zwei übereinanderliegende Abschnitte aufweist, wobei der unmittelbar an die Schneidkanten angrenzende Abschnitt einen kleineren Freiwinkel aufweist, als der darunter liegende Abschnitt.
Durch den kleineren Freiwinkel wird ein vergrößerter Keilwinkel und damit eine zusätzliche Stabilisierung der Schneidkanten erreicht.

Eine besonders effektive Bearbeitung wird dann erreicht, wenn die Wendeschneidplatte in etwa parallelogrammförmig mit langen Hauptschneidkanten und kurzen Nebenschneidkanten ausgeführt ist. Mittels eines Fräswerkzeuges mit derartigen Wendeschneidplatten lassen sich große Schnitttiefen, verbunden mit guter Stabilität auch bei kleinen Fräsdurchmessern erreichen. Darüber hinaus sind derartige Werkzeuge zum Schrägeintauchen bei der Bearbeitung geeignet
Der herausragende Vorteil eines Fräswerkzeuges gemäß vorliegender Erfindung liegt in der tatsächlich erzielbaren Glattheit der Werkstückoberfläche in Richtung parallel zur Rotationsachse des Fräswerkzeuges.
Die nachfolgenden Abbildungen 7a - 7c geben eine halbquantitative Aussage zur Werkstückoberflächengüte gemäß Erfindung im Vergleich zum zitierten Stand der Technik.

Im Folgenden wird die Erfindung an Hand von Figuren näher erläutert.
Es zeigen:
- Figur 1: ein erfindungsgemäßes Fräswerkzeug in Schrägansicht
- Figur 2: den Schneidenbereich des erfindungsgemäßen Fräswerkzeuges nach Figur 1 in Seitenansicht
- Figur 3: eine Wendeschneidplatte des Fräswerkzeuges nach Figur 1 und Figur 2 in vergrößerter Darstellung in Schrägansicht
- Figur 4: die Prinzipdarstellung der Wendeschneidplatte des Fräswerkzeuges nach Figur 1 und Figur 2 in entsprechender Einbaulage zusammen mit dem bearbeiteten Werkstück
- Figur 5: die Prinzipdarstellung der Wendeschneidplatte nach Figur 4 in Draufsicht
- Figur 6: die vergrößerte, stark überzeichnete Darstellung der Erzeugenden der Hüllfläche, die durch die Rotation der Wendeschneidplatte nach Figur 4 entsteht
- Figur 7a: die vergrößerte Prinzipdarstellung der erzeugten Werkstückoberfläche mit einem Fräswerkzeug nach dem Stand der Technik
- Figur 7b: die vergrößerte Prinzipdarstellung der erzeugten Werkstückoberfläche mit einem weiteren Fräswerkzeug nach dem Stand der Technik
- Figur 7c: die vergrößerte Prinzipdarstellung der erzeugten Werkstückoberfläche mit einem erfindungsgemäßen Fräswerkzeug

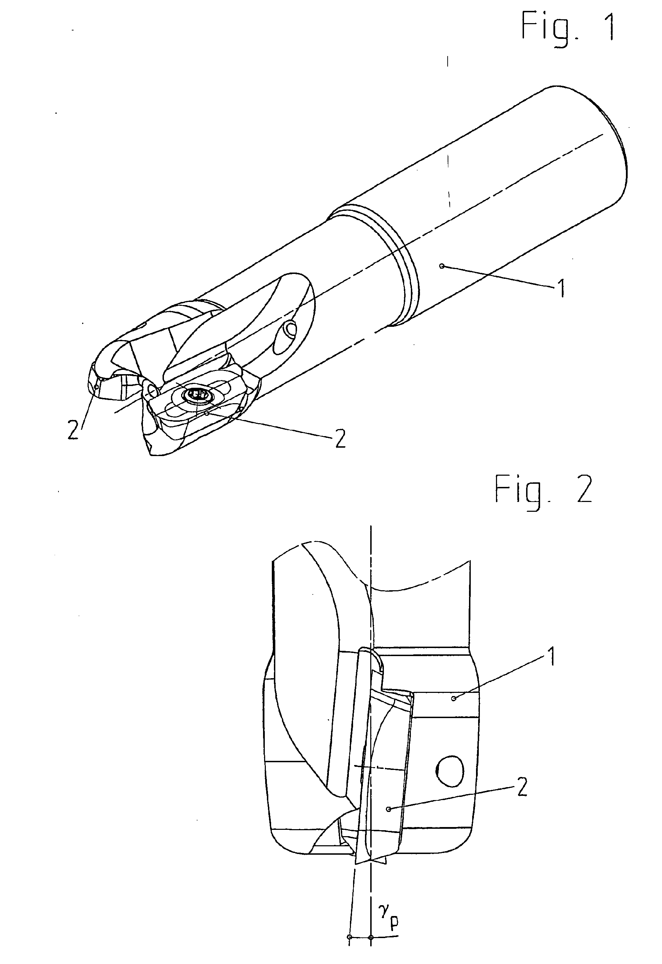

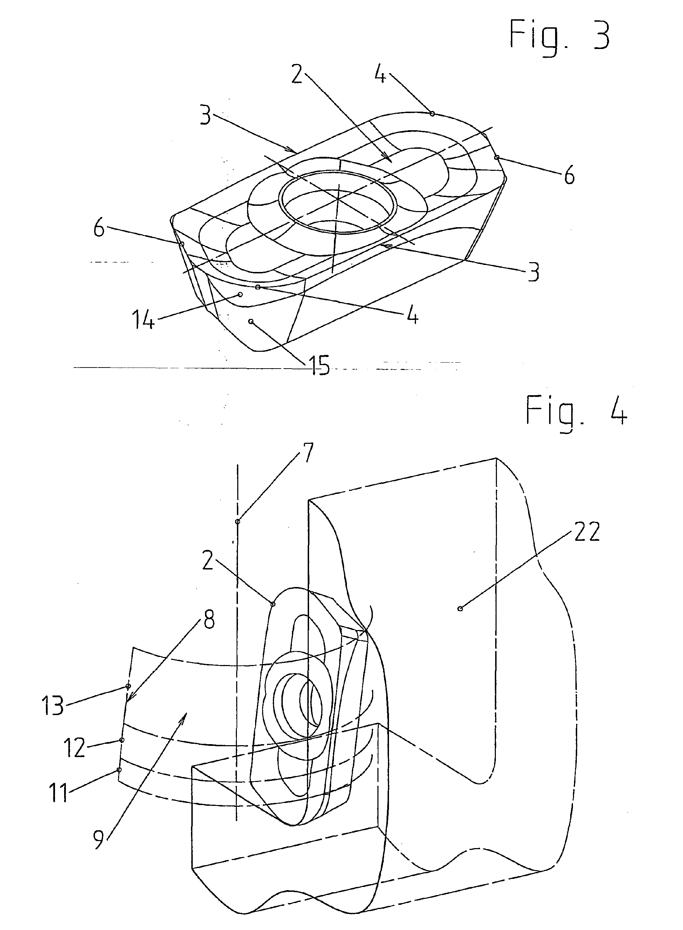

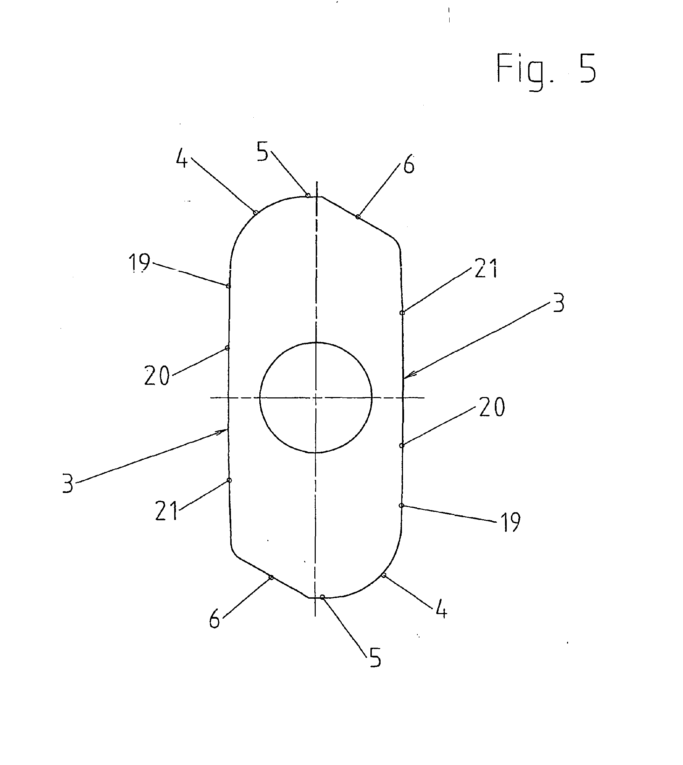

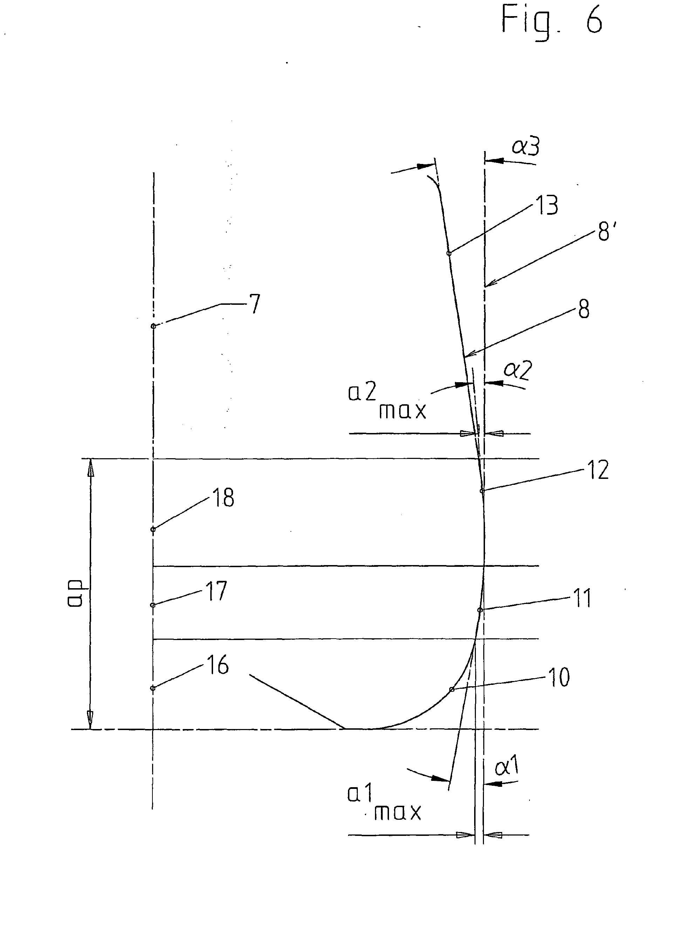

In Figur 1 und 2 ist ein erfindungsgemäßes Fräswerkzeug -1- in Wendeschneidplattenausführung als Schaftfräser mit zwei Wendeschneidplatten -2- gezeigt. Die Wendeschneidplatten -2- sind dabei unter einem axialen Anstellwinkel γₚ von 10° in der entsprechenden Aufnahme des Fräswerkzeuges -1- angeordnet.
Die entsprechende Wendeschneidplatte -2- nach Figur 3 ist in etwa parallelogrammförmig mit langen Hauptschneiden -3- und kurzen Nebenschneiden -6- ausgeführt. Die an die einzelnen Hauptschneiden -3- und Schneidecken -4- anschließenden Freiflächen weisen jeweils zwei übereinanderliegende Bereiche -14-, und -15- auf. Der unmittelbar an die Hauptschneiden -3- und Schneidecken -4- angrenzende Bereich -14- weist einen kleineren Freiwinkel auf als der darunter liegende Bereich -15-. Dadurch wird der Keilwinkel des Bereiches -14- vergrößert und damit die Stabilität der Schneidkanten erhöht.
Die Wendeschneidplatte -2- mit den unterschiedlichen Schneidenabschnitten ist in Figur 5 dargestellt. Die Wendeschneidplatte weiset jeweils zwei Schneidecken -4- mit daran anschließenden zentralen Planschneidenabschnitten -5- auf. Am jeweils anderen Ende gehen die Schneidecken -4- in Hauptschneiden -3- über, die dann wiederum in Nebenschneiden -6- münden. Jede Hauptschneide -3- weist einzelne Schneidenabschnitte -19-, -20- und -21- auf.
Die Wendeschneidplatte -2- in Einbaulage im Fräswerkzeug mit einem axialen Einstellwinkel γₚ von 10° ist mit einem Ausschnitt des damit bearbeiteten Werkstückes -22- in Figur 4 dargestellt.
In dieser Figur ist auch ein Teil der Hüllfläche -9- angedeutet, welche die Wendeschneidplatte -2- bei Rotation des Fräswerkzeuges beschreibt. Die Erzeugende -8- der vollständigen Hüllfläche -9- ist in stark überzeichneter Darstellung in Figur 6 dargestellt. Die Erzeugende -8- beginnt mit einem Bereich -10- welcher der Schneidecke -4- der Wendeschneidplatte -2-entspricht. Anschließend an diesen Bereich -10- folgt ein erster Abschnitt -11-der dem Bereich -19- der Wendeschneidplatte -2- entspricht. Dieser Abschnitt -11- verläuft so, dass sein Abstand von der Rotationsachse -7- am Anfang am kleinsten ist und am Ende am größten ist und sein Endpunkt auch auf der fiktiven Erzeugenden -8'- der idealen Zylinderfläche liegt. Der Abschnitt -11- geht dann in einen zweiten Abschnitt -12- über, der dem Bereich -20- der Wendeschneidplatte -2- entspricht. Der Abschnitt -12- verläuft so, dass er am Anfang den größten Abstand von der Rotationsachse -7-aufweist und auf einen kleinsten Wert am Ende dieses Abschnittes -12-abnimmt. Der zweite Abschnitt -12- ist dabei in seiner Projektionslänge -18- in Richtung der Rotationsachse -7- etwa 1,5 mal so lang wie die Projektionslänge -17- des ersten Abschnittes -11- in dieser Richtung. Die Projektionslänge der Erzeugenden -8- des Bereiches -10-, welcher der Schneidecke -4- entspricht, ist mit-16- bezeichnet. Die bestmögliche Qualität der bearbeiteten Oberfläche wird dann erreicht, wenn die Summe dieser Projektionslängen -16-, -17-, -18- in etwa der für die Zerspanung vorgesehenen Schnitttiefe ap entspricht.

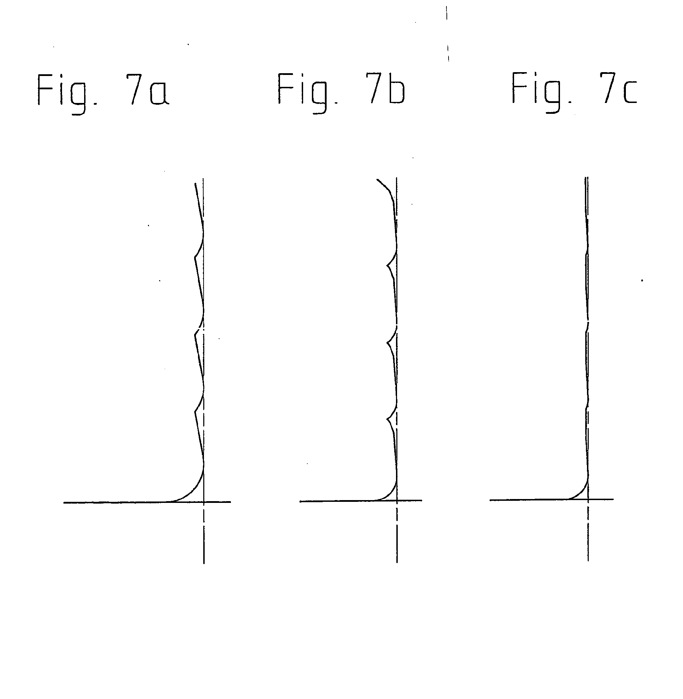

Die Figuren 7a, 7b und 7c zeigen die unterschiedlichen Werkstückoberflächen, welche mit zwei Fräswerkzeugen nach dem Stand der Technik und mit einem erfindungsgemäßen Fräswerkzeug erzeugt wurden in prinzipieller, vergrößerter Darstellung. Es ist jeweils die Werkstückoberfläche in einem Schnitt gezeigt, wobei die Rotationsachse des Fräswerkzeuges in der Schnittfläche liegt.
Die Werkstückoberfläche nach Figur 7a entspricht in etwa einer Oberfläche, wie sei durch Bearbeitung mit einem Fräswerkzeug nach dem Stand der Technik beispielsweise entsprechend der eingangs zitierten EP 0 489 702 B1 erzielt wird.
Die wellenförmige Oberfläche weist Wellenberge mit gleichmäßig stark ansteigenden Flanken und gleichzeitig tiefe Wellentäler auf. Die Kämme der Wellenberge sind relativ scharfkantig. Die Werkstückoberfläche nach Figur 7b entspricht in etwa einer Oberfläche, wie sie durch Bearbeitung mit einem Fräswerkzeug nach dem Stand der Technik entsprechend der eingangs zitierten EP 0 587 109 B1 erzielt wird. Hier weist die wellenförmige Oberfläche Wellenberge auf, deren Flanken über einen großen Bereich wesentlich flacher ansteigen. Aber im Endbereich steigen die Flanken wiederum sehr stark an, so dass es hier zu noch scharfkantigeren Kämmen der Wellenberge kommt. Die Oberfläche nach Figur 7c, die mit einem erfindungsgemäßen Fräswerkzeug hergestellt wurde, weist im Vergleich dazu sehr flach ansteigende, niedrige Wellenberge ohne scharfkantige Bergkämme auf. Eine derartige Oberfläche ist merklich glatter und insbesondere für die Aufbringung von Lacken gut geeignet.

## Patentansprüche

1. Fräswerkzeug (1) mit mindestens einem Schneidenbereich mit jeweils einer aus Hauptschneide (3), Schneidecke (4) - wahlweise mit angrenzendem Planschneidenabschnitt (5) - und Nebenschneide (6) aufgebauten Schneidengeometrie, zum Fräsen von in Ebenenrichtung parallel zur Rotationsachse (7) des Fräswerkzeuges (1) glatten Werkstückoberflächen,
**dadurch gekennzeichnet,**
**dass** die Erzeugende (8) der bei Rotation des Fräswerkzeuges (1) entstehenden Hüllfläche (9) aneinander grenzend aufweist, einen Schneideckenbereich (10), einen ersten Abschnitt (11) und einen zweiten Abschnitt (12); dass der erste Abschnitt (11) von mindestens 1 mm Projektionslänge (17) - in der Projektion auf die Rotationsachse (7) - den kleinsten Abstand von der Rotationsachse (7) im an die Schneidecke angrenzenden Anfang und den größten Abstand am Ende dieses Abschnittes (11) aufweist, wobei die Tangenten an jeden Punkt dieses Abschnittes (11) mit der Richtung der Rotationsachse (7) jeweils einen Winkel α₁ im Winkelbereich von 0° bis 5 ° einschließen, dass weiters der zweite Abschnitt (12) von mindestens 1,5 mm Projektionslänge (18) den größten Abstand von der Rotationsachse (7) am an den ersten Abschnitt (11) angrenzenden Anfang des zweiten Abschnittes (12) und den kleinsten Abstand am Ende dieses Abschnittes (12) aufweist, wobei die Tangenten an jeden Punkt dieses Abschnittes (12) mit der Richtung der Rotationsachse (7) jeweils einen, zum Ende hin stetig zunchmenden Winkel α₂ im Winkelbereich von > 0° bis 3° einschließen; und dass die Projektionslänge (18) des zweiten Abschnittes (12) mindestens 1,5 mal so groß ist wie die Projektionslänge (17) des ersten Abschnittes (11).

2. Fräswerkzeug nach Anspruch 1, **dadurch gekennzeichnet, dass** die Schneidengeometrie so ausgelegt ist, dass die Projektionslängen (16,17) von dem der Schneidecke (4) entsprechenden Bereich (10) sowie vom ersten Abschnitt (11) in Summe, in etwa der für die Zerspanung vorgesehenen Schnitttiefe ap des Fräswerkzeuges (1) entsprechen.

3. Fräswerkzeug (1) nach Anspruch 1 oder 2, **dadurch gekennzeichnet, dass** die Projektionslänge (17) des ersten Abschnittes (11) etwa 20 - 35 % von der Summe der Projektionslängen (17,18) des ersten Abschnittes (11) und des zweiten Abschnittes (12) beträgt.

4. Fräswerkzeug (1) nach einem der Ansprüche 1 bis 3, **dadurch gekennzeichnet, dass** das Fräswerkzeug einen an die Schneidecke (4) angrenzenden Planschneidenabschnitt (5) aufweist, der in etwa 90° zur Rotationsachse (7) des Fräswerkzeuges (1) verläuft.

5. Fräswerkzeug (1) nach einem der Ansprüche 1 bis 4, **dadurch gekennzeichnet, dass** der Schneidenbereich des Fräswerkzeuges (1) durch die Schneidkanten einer geklemmten Wendeschneidplatte (2) gebildet ist.

6. Fräswerkzeug (1) nach Anspruch 5, **dadurch gekennzeichnet, dass** der erste Abschnitt (11) und der zweite Abschnitt (12) kreisbogenförmig gekrümmt sind, wobei der Radius der Krümmung des ersten Abschnittes (11) innerhalb eines Bereiches liegt der der 8 bis 15-fachen Gesamtlänge der Hauptschneide (3) entspricht und der Radius der Krümmung des zweiten Abschnittes (12) innerhalb eines Bereiches liegt der der 20 bis 40-fachen Gesamtlänge der Hauptschneide (3) entspricht.

7. Fräswerkzeug (1) nach Anspruch 6, **dadurch gekennzeichnet, dass** anschließend an den zweiten Abschnitt (12) ein dritter Abschnitt (13) angeordnet ist, wobei die Tangenten an jeden Punkt dieses dritten Abschnittes (13) einen Winkel α₃ von mehr als 3° mit einer Parallelen zur Rotationsachse (7) einschließen, wobei die jeweiligen Werte dieses Winkels α₃ von Beginn bis zum Ende des Abschnittes (13) kontinuierlich größer werden.

8. Fräswerkzeug (1) nach einem der Ansprüche 5 bis 7, **dadurch gekennzeichnet, dass** die einzelnen Nebenschneiden (6) , Schneidecken (4) und Hauptschneiden (3) der Wendeschneidplatte (2) zumindest teilweise auf einer gemeinsamen Ebene parallel zur Auflagefläche der Wendeschneidplatte (2) liegen und dass nicht auf der gemeinsamen Ebene liegende Schneidkantenabschnitte von dieser Ebene abfallend ausgeführt sind.

9. Fräswerkzeug (1) nach einem der Ansprüche 5 bis 8, **dadurch gekennzeichnet, dass** die an die einzelnen Hauptschneiden (3) und an die Schneidecken (4) anschließende Freifläche zwei in Seitenansicht übereinanderliegende Bereiche (14,15) aufweist, wobei der unmittelbar an die Schneidkanten angrenzende Bereich (14) einen kleineren Freiwinkel aufweist wie der darunter liegende Bereich (15).

10. Fräswerkzeug (1) nach einem der Ansprüche 5 bis 9, **dadurch gekennzeichnet, dass** die Wendeschneidplatte (2) in etwa parallelogrammförmig, mit langen Hauptschneiden (3) und kurzen Nebenschneiden (6), ist.

## Claims

1. Milling tool (1) comprising at least one cutting edge region, respectively comprising a cutting edge geometry composed of a main cutting edge (3), a cutting corner (4) - possibly with an adjacent face cutting edge portion (5) - and a secondary cutting edge (6), for milling smooth workpiece surfaces in the plane direction parallel to the rotational axis (7) of the milling tool (1), **characterised in that** the generatrix (8) of the enveloping surface (9) produced when rotating the milling tool (1) has, adjacent to one another, a cutting corner region (10), a first portion (11) and a second portion (12); **in that** the first portion (11) with a projection length (17) of at least 1 mm - in the projection onto the rotational axis (7) - is at the closest distance to the rotational axis (7) at the beginning point adjacent to the cutting corner and is at the furthest distance from the rotational axis at the end point of said portion (11), the respective tangents at each point of said portion (11) enclosing an angle α₁ in the angular range of 0° to 5° with the direction of the rotational axis (7), **in that**, furthermore, the second portion (12) with a projection length (18) of at least 1.5 mm is at the furthest distance from the rotational axis (7) at the beginning point of the second portion (12) adjacent to the first portion (11) and is at the closest distance to the rotational axis at the end point of said portion (12), the respective tangents at each point of said portion (12) enclosing an angle α₂, in the angular range of >0° to 3°, increasing progressively towards the end, with the direction of the rotational axis (7); and **in that** the projection length (18) of the second portion (12) is at least 1.5 times as great as the projection length (17) of the first portion (11).

2. Milling tool according to Claim 1, **characterised in that** the cutting edge geometry is designed such that the projection lengths (16, 17) of the region (10) corresponding to the cutting corner (4) as well as of the first portion (11), approximately correspond in total to the cutting depth ap of the milling tool (1) provided for the machining process.

3. Milling tool (1) according to Claim 1 or 2, **characterised in that** the projection length (17) of the first portion (11) is approximately 20 - 35% of the sum of the projection lengths (17, 18) of the first portion (11) and of the second portion (12).

4. Milling tool (1) according to one of Claims 1 to 3, **characterised in that** the milling tool has a face cutting edge portion (5) adjacent to the cutting corner (4), which extends approximately at 90° to the rotational axis (7) of the milling tool (1).

5. Milling tool (1) according to one of Claims 1 to 4, **characterised in that** the cutting edge region of the milling tool (1) is formed by the cutting edges of a clamped indexable cutting insert (2).

6. Milling tool (1) according to Claim 5, **characterised in that** the first portion (11) and the second portion (12) are curved in the form of a circular arc, the radius of curvature of the first portion (11) being within a range which corresponds to 8 to 15 times the total length of the main cutting edge (3), and the radius of curvature of the second portion (12) being within a range which corresponds to 20 to 40 times the total length of the main cutting edge (3) .

7. Milling tool (1) according to Claim 6, **characterised in that** a third portion (13) is arranged adjacent to the second portion (12), the tangents at each point of said third portion (13) enclosing an angle α₃ of more than 3° with a line parallel to the rotational axis (7), the respective values of said angle α₃ becoming progressively greater from the beginning to the end of the portion (13).

8. Milling tool (1) according to one of Claims 5 to 7, **characterised in that** the individual secondary cutting edges (6), cutting corners (4) and main cutting edges (3) of the indexable cutting insert (2) are located at least partially on a common plane parallel to the bearing surface of the indexable cutting insert (2) and **in that** cutting edge portions not located on the common plane are designed to be inclined relative to said plane.

9. Milling tool (1) according to one of Claims 5 to 8, **characterised in that** the clearance face adjacent to the individual main cutting edges (3) and the cutting corners (4) has two regions (14, 15) located one above the other in side view, the region (14) immediately adjacent to the cutting edges having a smaller clearance angle than the region (15) located thereunder.

10. Milling tool (1) according to one of Claims 5 to 9, **characterised in that** the indexable cutting insert (2) is of approximately parallelogram shape with long main cutting edges (3) and short secondary cutting edges (6).

## Revendications

1. Outil de fraisage (1), comprenant au moins une zone de taillants, dont la géométrie de taillants consiste respectivement en un taillant principal (3), un coin de coupe (4) - facultativement avec un segment adjacent (5) de taillant de planage - et un taillant secondaire (6), pour fraiser des surfaces d'une pièce à usiner lisses, dans une direction de plan parallèle à l'axe de rotation (7) de l'outil de fraisage (1),
**caractérisé en ce que** la génératrice (8) de la surface d'enveloppe (9) formée lors de la rotation de l'outil de fraisage (1) comprend une zone (10) de coin de coupe, un premier segment (11) et un deuxième segment (12) adjacents entre eux; **en ce que** la distance entre le premier segment (11), d'une longueur (17) de projection - en projection sur l'axe de rotation (7) - d'au moins 1 mm, et l'axe de rotation (7) est minimale au début adjacent au coin de coupe et maximale à l'extrémité de ce segment (11), l'angle respectif α₁ entre les tangentes en chaque point de ce segment (11) et la direction de l'axe de rotation (7) étant dans la plage angulaire de 0 degrés à 5 degrés, **en ce que** de plus la distance entre le deuxième segment (12), d'une longueur (18) de projection d'au moins 1,5 mm, et l'axe de rotation (7) est maximale au début adjacent au premier segment (11) et minimale à l'extrémité de ce segment (12), l'angle respectif α₂ entre les tangentes en chaque point de ce segment (12) et la direction de l'axe de rotation (7) croissant constamment en direction de l'extrémité dans la plage angulaire de >0 degré à 3 degrés, et **en ce que** la longueur (18) de la projection du deuxième segment (12) est au moins égale à 1,5 fois la longueur (17) de la projection du premier segment (11).

2. Outil de fraisage (1) selon la revendication 1, **caractérisé en ce que** la somme des longueurs des projections (16, 17) de la zone (10), correspondant au coin de coupe (4), et du premier segment (11) correspond approximativement à la profondeur de coupe ap, prévue pour l'enlèvement de copeaux, de l'outil de coupe (1).

3. Outil de fraisage (1) selon la revendication 1 ou 2, **caractérisé en ce que** la longueur de la projection (17) du premier segment (11) correspond approximativement à 20 à 35% de la somme des longueurs des projections (17, 18) du premier segment (11) et du deuxième segment (12).

4. Outil de fraisage (1) selon l'une quelconque des revendications 1 à 3, **caractérisé en ce que** l'outil de coupe comprend un segment (5) de coupe de planage qui est adjacent au coin de coupe (4) et dont le tracé forme un angle d'environ 90 degrés avec l'axe de rotation (7) de l'outil de fraisage (1).

5. Outil de fraisage (1) selon l'une quelconque des revendications précédentes, **caractérisé en ce que** la zone de coupe de l'outil de coupe (1) est constitué par les arêtes de coupe d'un insert de coupe réversible serré (2).

6. Outil de fraisage (1) selon la revendication 5, **caractérisé en ce que** le premier segment (11) et le deuxième segment (12) sont incurvés en arcs de cercle, le rayon de courbure du premier segment (11) étant dans une plage qui correspond à 8 à 15 fois la longueur totale du taillant principal (3), et le rayon de courbure du deuxième segment (12) étant dans une plage qui correspond à 20 à 40 fois la longueur totale du taillant principal (3).

7. Outil de fraisage (1) selon la revendication 6, **caractérisé en ce qu'**un troisième segment (13) est disposé adjacent au deuxième segment (12), l'angle α₃ entre les tangentes en chaque point de ce segment (13) et une parallèle à l'axe de rotation (7) étant supérieur à 3 degrés, et les valeurs respectives de cet angle α₃ croissant continuellement depuis le début jusqu'à la fin de ce segment (13).

8. Outil de fraisage (1) selon l'une quelconque des revendications 5 à 7, **caractérisé en ce que** les taillants secondaires (6), coins de coupe (4) et taillants principaux (3), individuels, de la plaquette de coupe réversible (2) sont au moins partiellement dans un plan commun parallèle à la surface d'appui de la plaquette de coupe réversible (2), et **en ce que** des segments d'arêtes de coupe qui ne sont pas dans ce plan commun sont réalisés inclinés par rapport à ce plan.

9. Outil de fraisage (1) selon l'une quelconque des revendications 5 à 8, **caractérisé en ce que** la surface libre adjacente aux taillants principaux (3) et aux coins de coupe (4), individuels, comprend deux zones (14,15) superposées l'une à l'autre en vue de côté, l'angle libre de la zone (14) immédiatement adjacente aux arêtes de coupe étant inférieur à celui de la zone (15) qui lui est sous-jacente.

10. Outil de fraisage (1) selon l'une quelconque des revendications 5 à 9, **caractérisé en ce que** la structure de la plaquette de coupe réversible (2) est approximativement un parallélogramme à longs taillants principaux (3) et courts taillants secondaires (6).
